# EUROPEAN PATENT APPLICATION

(11) **EP 4 823 228 A2**
(43) Date of publication of application: **14.10.2026**
(21) Application number: 26201291.7
(22) Date of filing: 07.09.2023
(51) Int. Cl.: H04W 76/19

(54) **DISPLAY DEVICE AND OPERATION METHOD THEREOF**

(30) Priority: 28.09.2022 KR 20220123780; 09.02.2023 KR 20230017571
(62) Document number(s) of the earlier application(s) in accordance with Art. 76 EPC: 23872845.5 / 4 583 564
(71) Applicant: Samsung Electronics Co., Ltd., Suwon-si, Gyeonggi-do 16677 (KR)
(72) Inventor: KIM, Minji, Suwon-si, 16677 (KR); YOON, Sukun, Suwon-si, 16677 (KR); KIM, Deoknam, Suwon-si, 16677 (KR); KIM, Sangmin, Suwon-si, 16677 (KR); WOO, Jongha, Suwon-si, 16677 (KR)
(74) Representative: Appleyard Lees IP LLP

(57) **Abstract**

Provided are a display device and an operation method thereof. The display device is configured to, based on receiving a wireless communication connection request from an electronic device, detect a strength of a wireless communication signal received from the electronic device, identify, from among a plurality of connection modes, a connection mode corresponding to the strength of the wireless communication signal received from the electronic device, wherein, in the plurality of connection modes, automatic connection time representing a predetermined amount of time that elapses to automatically connect to the electronic device, varies depending on the strength of the wireless communication signal, control the display to display a message informing about an automatic connection time corresponding to the identified connection mode, and determine whether to perform an operation of automatic connection to the electronic device according to a user response corresponding to the displayed message and perform the operation of automatic connection according to the determination.

## Description

### Technical Field

Various embodiments relate to a display device and an operation method thereof, and more particularly, to a display device connected to an electronic device by using wireless communication, and an operation method thereof.

### Background Art

Bluetooth is the personal short-range wireless communications industry standard for digital communication devices. Bluetooth, which uses short-wave ultra-high frequency (UHF) radio waves of 2.4 GHz to 2.485 GHz included in an industrial, scientific, and medical (ISM) band to specify a short-distance data communication method between electronic devices, has been used to exchange digital information at a relatively low speed through wireless communication, including text information and voice information, between mouse and keyboards used in personal computers, as well as mobile phones, smartphones, tablet computers, and speakers. Bluetooth is used to exchange simple information between information devices over a distance of several meters to tens of meters, by using radio waves.

Bluetooth low energy (BLE) is a type of wireless personal area network (WPAN) technology and began, starting from Bluetooth 4.0, supporting a low energy (LE) protocol. While existing Bluetooth (BR/EDR + HS) technology focuses on data rate, BLE focuses on reducing power consumption and has emerged as a technology suitable for specific applications such as healthcare, fitness, and security systems.

### Disclosure of Invention

### Solution to Problem

According to an embodiment of the present disclosure, provided are a display device and operation method thereof, wherein a time required for an automatic connection is set differently according to a strength of a wireless communication signal of an electronic device when the electronic device is to be automatically connected to the display device, and thus, the display device is able to adaptively control an operation of automatic connection according to a state of the electronic device.

Technical problems to be achieved by the present disclosure are not limited to the technical problems mentioned above, and other technical problems that are not mentioned will be clearly understood by one of ordinary skill in the art from the following description.

According to an embodiment, a display device may include a display, a communication interface, memory storing one or more instructions, and a processor configured to execute the one or more instructions stored in the memory. According to an embodiment, the at least one processor may be configured to execute the one or more instructions to, based on receiving a wireless communication connection request from an electronic device, detect a strength of a wireless communication signal received from the electronic device. According to an embodiment, the at least one processor may be configured to execute the one or more instructions to identify, from among a plurality of connection modes, a connection mode corresponding to the strength of the wireless communication signal received from the electronic device, wherein, in the plurality of connection modes, automatic connection time representing a predetermined amount of time that elapses to automatically connect to the electronic device, varies depending on the strength of the wireless communication signal. According to an embodiment, the at least one processor may be configured to execute the one or more instructions to control the display to display a message informing about an automatic connection time corresponding to the identified connection mode. According to an embodiment, the at least one processor may be configured to execute the one or more instructions to determine whether to perform an operation of automatic connection to the electronic device according to a user response corresponding to the displayed message and perform the operation of automatic connection according to the determination.

According to an embodiment, an operation method of a display device may include, based on receiving a wireless communication connection request from an electronic device, detecting a strength of a wireless communication signal received from the electronic device. According to an embodiment, the operation method of the display device may include identifying, from among a plurality of connection modes in which automatic connection times indicating pre-determined times that elapse for automatic connection to the electronic device are different from each other according to strengths of wireless communication signals, a connection mode corresponding to the strength of the wireless communication signal received from the electronic device. According to an embodiment, the operation method of the display device may include displaying a message informing about an automatic connection time corresponding to the identified connection mode. According to an embodiment, the operation method of the display device may include determining whether to perform an operation of automatic connection to the electronic device according to a user response corresponding to the displayed message and performing the operation of automatic connection according to the determination.

According to an embodiment, a non-transitory computer-readable recording medium has recorded thereon one or more programs executed by a processor of a display device to implement an operation method of the display device, wherein the operation method of the display device may include, based on receiving a wireless communication connection request from an electronic device, detecting a strength of a wireless communication signal received from the electronic device, identifying, from among a plurality of connection modes, a connection mode corresponding to the strength of the wireless communication signal received from the electronic device, wherein, in the plurality of connection modes, automatic connection time representing a predetermined amount of time that elapses to automatically connect to the electronic device, varies depending on the strength of the wireless communication signal, displaying a message informing about an automatic connection time corresponding to the identified connection mode, and determining whether to perform an operation of automatic connection to the electronic device according to a user response corresponding to the displayed message and performing the operation of automatic connection according to the determination.

According to a display device, a method, and a non-transitory computer-readable storage medium, according to an embodiment, an operation of automatic connection may be further precisely processed by configuring the operation of automatic connection to be performed by setting different times to elapse for an automatic connection, according to a strength of a wireless communication signal of an electronic device.

The effects obtainable in embodiments of the present disclosure are not limited to the above-mentioned effects, and other effects not mentioned may be clearly understood by one of ordinary skill in the art from the description of the present disclosure.

### Brief Description of Drawings

The present disclosure may be easily understood by a combination of the following detailed descriptions and accompanying drawings, and reference numerals refer to structural elements.
FIG. 1 is a reference diagram for describing operations of a server device and a display device, according to various embodiments.
FIG. 2 illustrates an example of a system including a display device, an electronic device, and a server device, according to an embodiment.
FIG. 3 illustrates an example of a block diagram of a display device according to an embodiment.
FIG. 4 illustrates an example of a flowchart of an operation method of a display device, according to an embodiment.
FIG. 5 is a flowchart illustrating an example of a pairing operation between a display device and an electronic device, according to an embodiment.
FIG. 6 illustrates an example of a flowchart of an operation of reconnecting to an electronic device that performed a bonding process, after a disconnection, according to an embodiment.
FIG. 7 illustrates an example of a flowchart of an operation method of a display device, according to an embodiment.
FIG. 8 illustrates an example of a learning model mapped to one or more electronic devices that have pairing histories with a display device 100, according to an embodiment.
FIG. 9 illustrates an example of a connection mode table according to an embodiment.
FIG. 10 illustrates an example of a message informing about an automatic connection time, according to an embodiment.
FIG. 11 is a flowchart of an operation of storing a learning model for an electronic device paired with a display device, according to an embodiment.
FIG. 12 is a flowchart of an example of an operation of updating a learning model, according to an embodiment.
FIG. 13 illustrates an example in which a home environment is constructed in a virtual reality world, according to an embodiment.
FIG. 14 illustrates examples of tables for determining an automatic connection time in consideration of influence factors including an environment and a distance between Bluetooth low energy (BLE) devices, according to an embodiment.

### Mode for the Invention

The terms used in the present specification will be briefly defined, and the present disclosure will be described in detail.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the disclosure. Thus, the terms used in the present disclosure have to be defined based on the meaning of the terms together with the description throughout the specification.

When a part "includes" or "comprises" an element, unless there is a particular description contrary thereto, the part may further include other elements, not excluding the other elements. In addition, terms such as "unit" and "module" described in the specification denote a unit that processes at least one function or operation, which may be implemented in hardware or software, or implemented in a combination of hardware and software.

Hereinafter, embodiments will be described in detail with reference to the accompanying drawings such that one of ordinary skill in the art may easily implement the present disclosure. However, the present disclosure may be implemented in various different forms and is not limited to an embodiment described herein. Also, in the drawings, parts irrelevant to the description are omitted in order to clearly describe the present disclosure, and like reference numerals designate like elements throughout the specification.

In an embodiment of the present specification, the term "user" denotes a person who controls functions or operations of a computing device or an electronic device by using a control device, and may include a viewer, a manager, or an installation engineer.

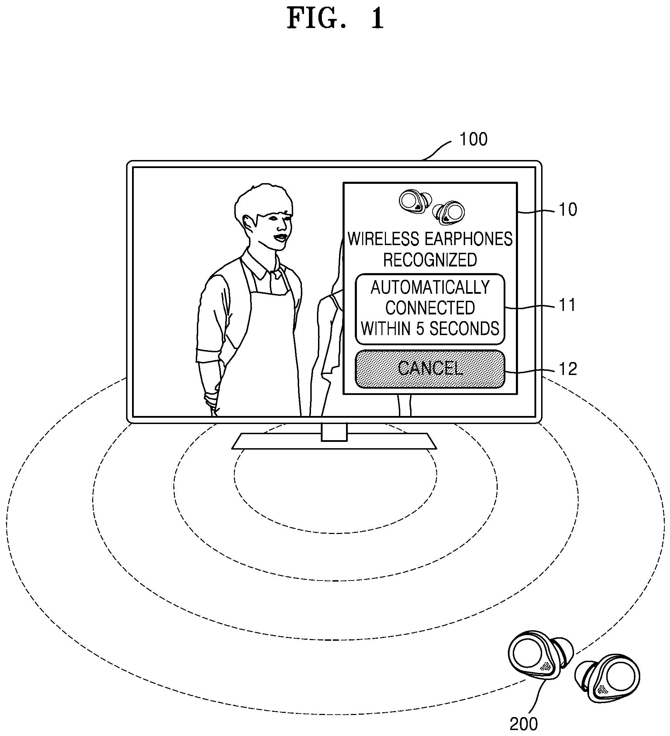

FIG. 1 is a reference diagram for describing operations of a display device and an electronic device, according to various embodiments.

Referring to FIG. 1, after Bluetooth pairing between a display device 100, such as a television (TV), an electronic device 200, such as wireless earphones, is completed, a Bluetooth connection may be disconnected and the display device 100 may receive a Bluetooth reconnection request from the electronic device 200 again. In this case, the display device 100 may perform an operation for confirming an intention of a user regarding a Bluetooth reconnection, through various methods. For example, when a reconnection request is received from the electronic device 200, the display device 100 may display a popup window asking an intention of the user, and perform a connection when the user presses a connect button (accept a connection) and not perform the connection when the user presses a close button (does not accept). Also, the connection may not be performed when the popup window disappears due to a timeout without an input from the user.

With respect to a reconnection experience of a personal portable device, such as a smartphone, and wireless earphones, when a previous connection history of the wireless earphones is the personal portable device, the personal portable device may automatically perform a reconnection operation without displaying a popup window, because the personal portable device is a personalized device and is not used by a plurality of users. In a case of a display device, such as a TV, the display device is not a personalized device but is a home device that may be used by a plurality of users, the display device may display a popup window asking an intention of a user for a reconnection. At this time, when the user is to connect wireless earphones, it may be inconvenience because the user has to pick up a TV controller and press a button displayed on the TV.

Thus, according to embodiments of the disclosure, an automatic connection time may be varied according to a Bluetooth signal strength during reconnection between the display device 100 and the electronic device 200. For example, the display device 100 may detect a strength of a Bluetooth wireless signal from the electronic device 200 and determine an automatic connection time corresponding to the detected strength of the Bluetooth wireless signal. For example, the display device 100 may prepare a plurality of connection modes respectively corresponding to a plurality of automatic connection times, calculate a target probability by inputting, to a pre-trained model, a value of strength of a Bluetooth wireless signal received from the electronic device 200, and identify to which connection mode among the plurality of connection modes the calculated target probability corresponds. Then, the display device 100 may obtain an automatic connection time corresponding to the identified connection mode.

Also, according to embodiments of the disclosure, an automatic connection time varied according to a Bluetooth signal strength may be informed to the user during a reconnection between the display device 100 and the electronic device 200, and the display device 100 may automatically reconnect to the electronic device 200 after the automatic connection time has elapsed. For example, referring to FIG. 1, based on receiving a connection request from the electronic device 200, the display device 100 may identify an automatic connection time corresponding to a strength of a Bluetooth wireless signal received from the electronic device 200, and output a popup window 10 informing about the identified automatic connection time. The popup window 10 may include an item 11 of <Automatically connected within 5 seconds> and an item 12 of <Cancel> together with a message indicating that wireless earphones have been recognized. When no input is received from the user for the popup window 10, the display device 100 may perform an operation of automatically connecting to the electronic device 200 after the automatic connection time of 5 seconds has elapsed. When an input of selecting the item 12 of <Cancel> is received from the user for the popup window 10, the display device 100 may not perform the operation of connecting to the electronic device 200.

Also, according to embodiments of the disclosure, parameters for determining an automatic connection time according to context in an actual user environment may be adjusted. For example, the display device 100 may update, according to the context in the actual user environment, the pre-trained model configured to output a target probability by using a value of strength of a Bluetooth wireless signal received from the electronic device 200 as an input. For example, the display device 100 may receive the pre-trained model from a server and store the same, transmit, to the server, result data of whether an automatic connection is performed based on the value of strength of the Bluetooth wireless signal received from the electronic device 200, thereby enabling the server to update the pre-trained model, and receive the updated pre-trained model from the server. As such, by reflecting, again to the pre-trained model, an automatic connection result indicating whether a Bluetooth automatic connection has been performed according to a strength of a Bluetooth wireless signal from the electronic device 200, i.e., a distance of the user, to adjust the parameters, an optimal connection method suitable for use environment of the user may be provided and user convenience may be enhanced.

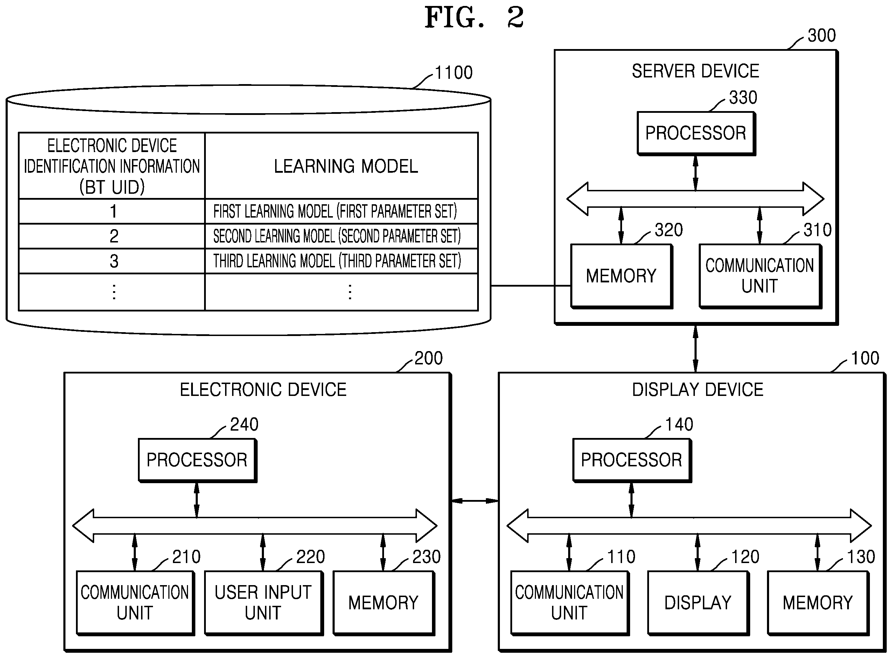

FIG. 2 illustrates an example of a system including a display device, an electronic device, and a server device, according to an embodiment.

Referring to FIG. 2, the system may include the display device 100, the electronic device 200, and a server device 300, which are connected to each other through a communication network.

The display device 100 is a device capable of displaying an image or data according to a request of the user, and may include a communication unit 110, a display 120, memory 130, and a processor 140.

The communication unit 110 may include one or more modules enabling wireless communication between the display device 100 and a wireless communication system or between the display device 100 and another device. The communication unit 110 may include one or more communication circuits. According to an embodiment, the communication unit 110 may perform communication with the electronic device 200 according to a short-range communication technology. The short-range communication technology may include, for example, Bluetooth communication, Wi-Fi communication, and infrared communication. According to an embodiment, the communication unit 110 may perform communication with the server device 300 according to an Internet protocol.

The display 120 may output an image or data processed by the display device 100.

The memory 130 may store programs for processes and controls by the processor 140 and may store data input to or output from the display device 100. Also, the memory 130 may store pieces of data required for operations of the display device 100.

The memory 130 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 140 controls all operations of the display device 100. For example, the processor 140 may perform functions of the display device 100 described in the present disclosure by executing one or more instructions stored in the memory 130. The processor 140 may include one or more processors.

According to an embodiment of the present disclosure, the processor 140 may store one or more instructions in memory provided therein, and control operations of the display device to be performed by executing the one or more instructions stored in the memory provided therein. In other words, the processor 140 may perform a certain operation by executing a program or at least one instruction stored in the memory 130 or in the memory provided in the processor 140.

According to an embodiment, the processor 140 may perform operations of the display device 100 described in the present disclosure by executing one or more instructions stored in the memory 130.

According to an embodiment, the processor 140 may execute the one or more instructions to, based on receiving a wireless communication connection request from an electronic device, detect a strength of a wireless communication signal received from the electronic device.

According to an embodiment, the processor 140 may execute the one or more instructions to identify, from among a plurality of connection modes in which automatic connection times indicating pre-determined times that elapse for automatic connection to the electronic device are different from each other according to strengths of wireless communication signals, a connection mode corresponding to the strength of the wireless communication signal received from the electronic device.

According to an embodiment, the processor 140 may execute the one or more instructions to control the display to display a message informing about an automatic connection time corresponding to the identified connection mode.

According to an embodiment, the processor 140 may execute the one or more instructions to process whether to perform an operation of automatic connection to the electronic device, according to a user response corresponding to the displayed message.

According to an embodiment, the processor 140 may be configured to execute the one or more instructions to detect the strength of the wireless communication signal, based on a received signal strength indicator (RSSI) of the wireless communication signal.

In the plurality of connection modes, the automatic connection time may be decreased as the strength of the wireless communication signal increases and the automatic connection time may be increased as the strength of the wireless communication signal decreases.

According to an embodiment, the processor 140 may be configured to execute the one or more instructions to perform the operation of automatic connection to the electronic device, based on the automatic connection time, when the user response corresponding to the displayed message is not received.

According to an embodiment, the processor 140 may be configured to execute the one or more instructions to not perform the operation of automatic connection to the electronic device when the user response of selecting cancellation is received in response to the displayed message.

According to an embodiment, the processor 140 may be configured to execute the one or more instructions to identify the connection mode corresponding to the detected strength of the wireless communication signal by using a pre-trained model.

According to an embodiment, the processor 140 may be configured to execute the one or more instructions to calculate a target probability corresponding to the detected strength of the wireless communication signal by using the pre-trained model and identify, as the connection mode, a connection mode to which the calculated target probability belongs from among the plurality of connection modes.

According to an embodiment, the processor 140 may be configured to execute the one or more instructions to update the pre-trained model by using a result of whether the operation of automatic connection to the electronic device has been performed.

According to an embodiment, the processor 140 may be configured to execute the one or more instructions to adjust the target probability according to the result of whether the operation of automatic connection has been performed and transmit the adjusted target probability to a server, and update the pre-trained model by receiving, from the server, the pre-trained model retrained based on the adjusted target probability.

The display device 100 may be any type of device that performs a function by including a processor and memory. The display device 100 may be a stationary type or portable type device. For example, the display device 100 may be a device capable of displaying image content, video content, game content, graphic content, or the like by including a display. The display device 100 may output or display an image or content received from the server device 300. The display device 100 may include any type of electronic device capable of receiving an outputting content, for example, a television (TV) such as a network television (TV), a smart TV, an Internet TV, a web TV, or an internet protocol (IP) TV, a computer such as a desktop computer, a laptop computer, or a tablet computer, or a smart device such as a smartphone, a cellular phone, a game player, a music player, a vide player, a medical device, or a home appliance. The display device 100 is referred to as a display device in that content is received and displayed, and may also be referred to as a content receiving device, a sync device, an electronic device, or a computing device.

The block diagram of the display device 100 shown in FIG. 2 is a block diagram according to an embodiment. The components of the block diagram may be integrated, a component may be added, or the component may be omitted according to the specification of the display device 100. For example, two or more components may be integrated into one component or one component may be divided into two or more components when necessary. Also, a function performed by each block is only for describing embodiments and specific operations or devices do not limit the scope of right of the present disclosure.

Hereinafter, the electronic device 200 will be described.

The electronic device 200 may include a communication unit 210, a user input unit 220, memory 230, and a processor 240. However, the electronic device 200 may include more or fewer components than illustrated components, and is not limited to the above example.

The communication unit 210 may include one or more modules enabling wireless communication between the electronic device 200 and the wireless communication system or between the electronic device 200 and another device. The communication unit 210 may include one or more communication circuits. According to an embodiment, the communication unit 210 may perform communication with the display device 100 according to a short-range communication technology. The short-range communication technology may include, for example, Bluetooth communication, Wi-Fi communication, and infrared communication. According to an embodiment, the communication unit 210 may perform communication with the server device 300 according to an Internet protocol.

The user input unit 220 may be any type of interface capable of receiving a user input. For example, the user input unit 220 may include a manipulation button for receiving an input of the user by being arranged in a portion of the electronic device 200, a touch sensitive display configured to detect a touch input, and a microphone for receiving a speech utterance input of the user.

The memory 230 may store programs for processes and controls by the processor 240 and may store data input to or output from the electronic device 200.

The memory 230 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 240 controls all operations of the electronic device 200. For example, the processor 240 may perform functions of the electronic device 200 described in the present disclosure by executing one or more instructions stored in the memory 230.

According to an embodiment of the present disclosure, the processor 240 may store one or more instructions in memory provided therein, and control the above-described operations to be performed by executing the one or more instructions stored in the memory provided therein. In other words, the processor 240 may perform a certain operation by executing a program or at least one instruction stored in the memory 230 or in the memory provided in the processor 240.

According to an embodiment, the processor 240 may execute the one or more instructions stored in the memory 230 to perform a communication connection to the display device 100 by using a short-range wireless communication technology. The short-range wireless communication technology may include a Bluetooth communication technology or a Wi-Fi direct technology.

According to an embodiment, the processor 240 may operate to execute the one or more instructions stored in the memory 230 to perform a certain operation in association with the display device 100 that has been Bluetooth-paired.

For example, when the electronic device 200 is wireless earphones, the processor 240 may control audio to be output by receiving an audio signal output from the paired display device 100.

For example, when the electronic device 200 is a smartphone, the processor 240 may control a video/audio signal to be output through the smartphone by receiving the video/audio signal output from the paired display device 100.

The electronic device 200 may be any type of device that performs a Bluetooth communication function by including a processor and memory. The electronic device 200 may include any electronic device, such as a smartphone, wireless earphones, or a smart watch.

Meanwhile, the block diagram of the electronic device 200 of FIG. 2 is a block diagram according to an embodiment. Components of the block diagram may be integrated, a component may be added, or a component may be omitted according to the specification of the electronic device 200 actually implemented. For example, two or more components may be integrated into one component or one component may be divided into two or more components when necessary. Also, a function performed by each block is only for describing embodiments and specific operations or devices do not limit the scope of right of the present disclosure.

Hereinafter, the server device 300 will be described.

The server device 300 may include a communication unit 310, memory 320, and a processor 330. However, the server device 300 may include more or fewer components than illustrated components, and is not limited to the above example. For example, the server device 300 may include a separate image processor for processing an image of an application executed by the server device 300.

The communication unit 310 may include one or more modules enabling wireless communication between the server device 300 and the wireless communication system or between the server device 300 and another device. The communication unit 310 may include one or more communication circuits. According to an embodiment, the communication unit 310 may perform communication with the display device 100 according to an Internet protocol. According to an embodiment, the communication unit 310 may perform communication with the electronic device 200 according to an Internet protocol.

The memory 320 may store programs for processes and controls by the processor 330 and may store data input to or output from the server device 300.

The memory 320 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 330 controls all operations of the server device 300. For example, the processor 330 may perform functions of the server device 300 described in the present disclosure by executing one or more instructions stored in the memory 320.

According to an embodiment of the present disclosure, the processor 330 may store one or more instructions in memory provided therein, and control the above-described operations to be performed by executing the one or more instructions stored in the memory provided therein. In other words, the processor 330 may perform a certain operation by executing a program or at least one instruction stored in the memory 320 or in the memory provided in the processor 330.

According to an embodiment, the processor 330 may be configured to execute the one or more instructions stored in the memory 320 to learn a pre-determined learning model that outputs a target probability by using a strength of a Bluetooth wireless signal as an input. The pre-determined learning model denotes a model pre-trained considering that a viewing distance from a display device is within a specific distance, by using a binomial logistic regression model. The target probability may be understood as a measure representing a possibility that a display device will perform Bluetooth connection with an electronic device, based on the strength of a Bluetooth wireless signal of the electronic device, the strength being received as an input.

According to an embodiment, the processor 330 may execute the one or more instructions stored in the memory 320 to receive information about the electronic device 200 paired with the display device 100 according to a request of the display device 100, map a learning model suitable for the electronic device 200, and store the learning model in a database 1100. The database 1100 may store corresponding learning models mapped to pieces of unique identification information (UID) of electronic devices, based on product characteristics or model characteristics of each electronic device.

According to an embodiment, the processor 330 may execute the one or more instructions stored in the memory 320 to transmit, to the display device 100, the learning model trained for the electronic device 200, according to a request of the display device 100.

According to an embodiment, the processor 330 may execute the one or more instructions stored in the memory 320 to receive, from the display device 100, a result of whether an automatic connection has been performed on the electronic device 200, update the learning model trained for the electronic device 200 by using the received result, and transmit the updated learning model to the display device 100.

The block diagram of the server device 300 shown in FIG. 2 is a block diagram according to an embodiment. Components of the block diagram may be integrated, a component may be added, or a component may be omitted according to the specification of the server device 300 actually implemented. For example, two or more components may be integrated into one component or one component may be divided into two or more components when necessary. Also, a function performed by each block is only for describing embodiments and specific operations or devices do not limit the scope of right of the present disclosure.

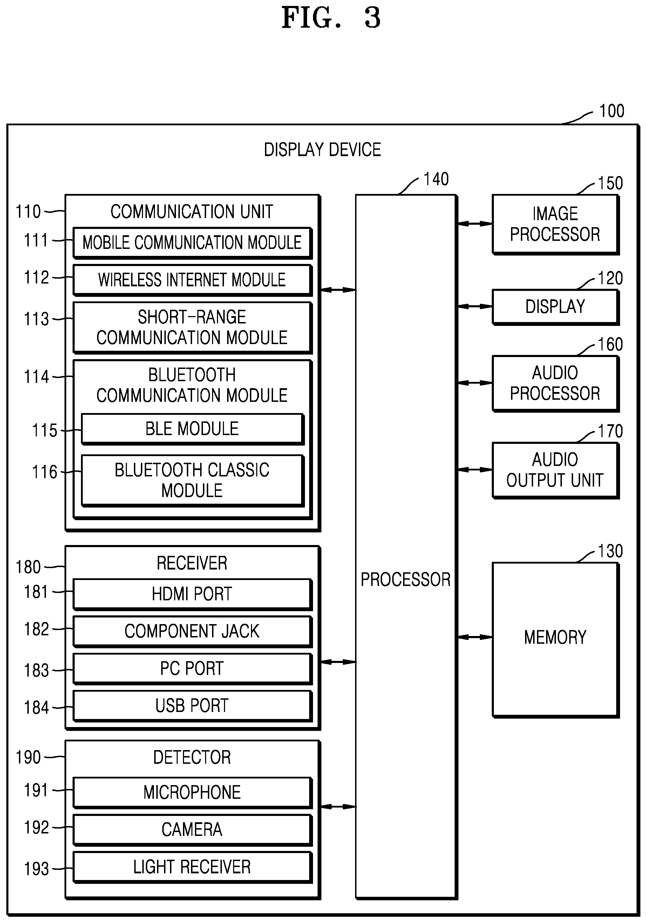

FIG. 3 illustrates an example of a block diagram of a display device according to an embodiment of the disclosure.

Referring to FIG. 3, the display device 100 may include, in addition to the communication unit 110, the display 120, the memory 130, and the processor 140, an image processor 150, an audio processor 160, an audio output unit 170, a receiver 180, and a detector 190.

The communication unit 110 may include one or more modules enabling wireless communication between the display device 100 and the wireless communication system or between the display device 100 and another electronic device. The communication unit 110 may include one or more communication circuits. For example, the communication unit 110 may include a mobile communication module 111, a wireless Internet module 112, and a short-range communication module 113.

The mobile communication module 111 may transmit or receive a wireless signal to or from at least one of a base station, an external terminal, and a server, on a mobile communication network. The wireless signal may include various types of data according to exchange of a voice call signal, an image call signal, or a text/multimedia message.

The wireless Internet module 112 denotes a module for a wireless Internet access, and may be provided inside or outside the display device 100. A wireless Internet technology may include wireless local area network (WLAN), wireless broadband (Wibro), world interoperability for microwave access (Wimax), and high speed downlink packet access (HSDPA). The wireless Internet module 112 may connect the display device 100 to another device through Wi-Fi peer-to-peer (P2P) connection.

The short-range communication module 113 denotes a module for short-range communication. Short-range communication technology may include Bluetooth, Bluetooth low energy (BLE), radio frequency identification (RFID), infrared data association (IrDA), ultra-wideband (UWB), and ZigBee.

According to an embodiment of the disclosure, the short-range communication module 113 may include a Bluetooth communication module 114. The Bluetooth communication module 114 may include a BLE module 115 and a Bluetooth classic module 116.

The BLE module 115 supports a BLE communication method. The BLE communication method may follow the Bluetooth 4.0 standard specification. The BLE communication method operates in an industrial scientific medical (ISM) frequency band and uses 40 radio frequency (RF) channels with channel intervals of 2 MHz. The RF channels of BLE are divided into 3 advertising channels and 37 data channels.

A packet of the BLE communication method includes a preamble (size of 1 octet), an access address (size of 4 octets), a packet data unit (PDU) (size of 2 octets to 39 octets), and cyclic redundancy check (CRC) (size of 3 octets). A PDU of an advertising packet may include a header having a size of 16 bits and a payload having a variable size. The payload of the advertising packet may include an address field of an advertiser having a size of 6 octets and a data field having a size of 0 to 31 octets. The address field of the advertiser may include a random device address or a public device address of the advertiser, designated through the header of the PDU. The public device address may be according to a universal local area network (LAN) media access control (MAC) address of the IEEE 802 standard. The public device address may include a company_assigned field in 24 least significant bits (LSBs) and a company_id field in 24 most significant bits (MSBs). The random device address includes a hash field in 24 LSBs and a random field in 24 MSBs. According to an aspect of the present disclosure, a value of the address field of the advertiser included in the payload may be used as an identifier of an electronic device that is the advertiser.

The BLE module 115 may receive, from the electronic device 200, an advertising packet including an identifier of the electronic device 200 and information indicating a start of a communication service, the advertising packet being broadcasted according to the BLE communication method.

Detailed data of the advertising packet may include transmit power information. For example, the detailed data of the advertising packet may include an AD Type field indicating that data is about a transmit power level, and an AD Data field indicating a value of the transmit power level. A path loss from the electronic device 200 to the display device 100 may be calculated by using a received signal strength indicator (RSSI) and transmit power information of the advertising packet.

The Bluetooth classic module 116 may support a Bluetooth classic communication method.

The Bluetooth classic module 116 may form a communication link using the Bluetooth classic communication method when the display device 100 transmits, to an electronic device, a message requesting a communication connection by using a Bluetooth communication method. Also, the processor 140 may control the Bluetooth classic module 116 to be deactivated until the message requesting the communication connection using the Bluetooth classic communication method is transmitted through the Bluetooth classic module 116. The processor 140 may control the Bluetooth classic module 116 to be activated so as to transmit the message requesting the communication connection using the Bluetooth classic communication method to the electronic device in which a negotiation procedure has been completed by using the BLE communication method.

The Bluetooth communication module 114 may include at least one antenna, an RF circuit, and a modem, and may be configured as hardware or software.

The display 120 may display, on a screen, an image signal received from the server device 300.

The memory 130 may store a program related to operations of the display device 100 and various types of data generated during the operations of the display device 100.

The memory 130 may store at least one instruction. Also, the memory 130 may store at least one instruction executed by the processor 140. Also, the memory 130 may store at least one program executed by the processor 140. Also, the memory 130 may store an application for providing a certain service.

In detail, the memory 130 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 140 controls all operations of the display device 100. For example, the processor 140 may perform functions of the display device 100 described in the present disclosure by executing one or more instructions stored in the memory 130.

According to an embodiment of the present disclosure, the processor 140 may store one or more instructions in memory provided therein, and control operations of the display device 100 to be performed by executing the one or more instructions stored in the memory provided therein. In other words, the processor 140 may perform a certain operation by executing a program or at least one instruction stored in the memory 130 or in the memory provided in the processor 140.

For example, the processor 140 may execute at least one instruction to control an intended operation to be performed. Here, the at least one instruction may be stored in an internal memory included in the processor 140 or in the memory 130 included in the display device 100 separately from the processor 140.

The processor 140 may execute the at least one instruction to control at least one component included in the display device 100 such that an intended operation is performed. Accordingly, even when it is described that the processor 140 performs certain operations, the processor 140 may control at least one component included in the display device 100 such that the certain operations are performed.

In addition, an example in which the processor 140 includes one processor has been described and illustrated, but the processor 140 may include a plurality of processors.

For example, the processor 140 may include random access memory (RAM) storing a signal or data input from the outside of the display device 100 or used as a storage area corresponding to various tasks performed by the display device 100, read-only memory (ROM) storing a control program for controlling the display device 100, an application for providing a certain function or service, and/or a plurality of instructions, and at least one processor. The processor 140 may include a graphics processing unit (GPU) (not shown) for graphics processing corresponding to a video. The processor 140 may be implemented as a system-on-chip (SoC) in which a core (not shown) and the GPU are integrated. Also, the processor 140 may include a multi-core greater than a single core. For example, the processor 140 may include a dual-core, a triple-core, a quad-core, a hexa-core, an octa-core, a deca-core, a dodeca-core, hexadecimal-core, or the like.

According to control by the processor 140, the image processor 150 may process an image signal received from the receiver 180 or the communication unit 110 and output the processed image signal to the display 120.

According to control by the processor 140, the audio processor 160 may convert an audio signal received from the receiver 180 or the communication unit 110 into an analog audio signal, and output the analog audio signal to the audio output unit 170.

The audio output unit 170 may output audio (e.g., speech or sound) input through the communication unit 110 or receiver 180. Also, the audio output unit 170 may output audio stored in the memory 130 according to control by the processor 140. The audio output unit 170 may include at least one of a speaker, a headphone output terminal, or a Sony/Philips digital interface (S/PDIF) terminal or a combination thereof.

The receiver 180 may receive video (e.g., a moving image), audio (e.g., speech or music), and additional information (e.g., electronic program guide (EPG)) from the outside of the display device 100 according to control by the processor 140. The receiver 180 may include one of a high-definition multimedia interface (HDMI) port 181, a component jack 182, a personal computer (PC) port 183, and a universal serial bus (USB) port 184, or a combination thereof. The receiver 180 may further include a display port (DP), a thunderbolt, and a mobile high-definition link (MHL), in addition to the HDMI port 181.

The detector 190 detects speech of a user, an image of the user, or an interaction of the user, and may include a microphone 191, a camera 192, and a light receiver 193.

The microphone 191 receives speech uttered by the user. The microphone 191 may convert the received speech into an electric signal and output the electric signal to the processor 140. The user's speech may include, for example, speech corresponding to a menu or function of the display device 100.

The camera 192 may receive an image (e.g., consecutive frames) corresponding to motion of the user including a gesture within a camera recognition range. The processor 140 may select a menu displayed on the display device 100 by using a received motion recognition result or perform control corresponding to the motion recognition result.

The light receiver 193 receives an optical signal (including a control signal) received from an external control device. The light receiver 193 may receive an optical signal corresponding to a user input (e.g., touch, press, touch gesture, speech, or motion) from the control device. A control signal may be extracted from the received optical signal according to control by the processor 140.

The processor 140 may control all operations of the display device 100 and a signal flow between the display device 100 and internal components (not shown), and perform a function of processing data. When there is a user input or a pre-set and stored condition is satisfied, the processor 140 may execute an operating system (OS) and various applications stored in the memory 130.

In addition, the processor 140 may include a graphics processing unit (not shown) for graphics processing corresponding to a video. The graphic processing unit (not shown) generates a screen including various objects, such as an icon, an image, or text, by using an operator (not shown) and a renderer (not shown). The operator calculates attribute values such as coordinate values, shapes, sizes, and colors of objects to be displayed according to layout of a screen by using a user interaction detected through the detector 190. The renderer generates a screen of various layouts including objects based on the attribute values calculated by the operator.

The memory 130 may store a program related to operations of the display device 100 and various types of data generated during the operations of the display device 100.

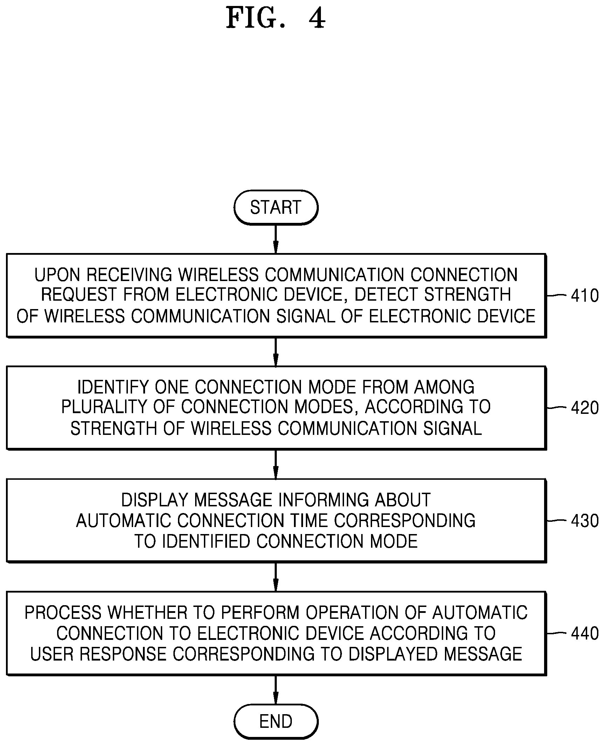

FIG. 4 illustrates an example of a flowchart of an operation method of a display device, according to an embodiment.

Referring to FIG. 4, in operation 410, based on receiving a wireless communication connection request from the electronic device 200, the display device 100 may detect a strength of a wireless communication signal of the electronic device 200.

According to an embodiment, the display device 100 may detect a strength of a Bluetooth communication signal of the electronic device 200, based on receiving a Bluetooth communication connection request from the electronic device 200.

According to an embodiment, the display device 100 may obtain information about the strength of the Bluetooth communication signal, from the Bluetooth communication signal.

According to an embodiment, the display device 100 may detect a strength of a BLE signal from the BLE signal of the electronic device 200, based on receiving a wireless communication connection request using a BLE communication method from the electronic device 200.

In operation 420, the display device 100 may select one connection mode from among a plurality of connection modes in which automatic connection times indicating pre-determined times that elapse for automatic connection to the electronic device 200 are different from each other according to strengths of wireless communication signals.

According to an embodiment, the display device 100 may store information about the plurality of connection modes. The plurality of connection modes indicate connection modes in which automatic connection times are different from each other according to strength of a wireless communication signal. The automatic connection time may indicate the pre-determined time that elapses for automatic connection to the electronic device 200. For example, the plurality of connection modes may include three connection modes, and an automatic connection time may be set to 3 seconds according to a first connection mode indicating a mode in which the display device 100 starts an operation of automatic connection after 3 seconds have elapsed. An automatic connection time may be set to 5 seconds according to a second connection mode indicating a mode in which the display device 100 starts an operation of automatic connection after 5 seconds have elapsed. An automatic connection time may be set to 10 seconds according to a third connection mode indicating a mode in which the display device 100 starts an operation of automatic connection after 10 seconds have elapsed. The automatic connection time may be set to be short when the strength of the wireless communication signal of the electronic device 200 is strong, so that the operation of automatic connection starts after a relatively short period of time, and the automatic connection time may be set to be long when the strength of the wireless communication signal of the electronic device 200 is weak, so that the operation of automatic connection starts after a relatively long period of time. The number of connection modes may be variously determined and the automatic connection time may also be variously determined.

According to an embodiment, the display device 100 may identify one connection mode corresponding to the strength of the wireless communication signal of the electronic device 200 from among the plurality of connection modes.

According to an embodiment, the display device 100 may obtain a target probability corresponding to the strength of the wireless communication signal of the electronic device 200 by using a model pre-trained to output a target probability by using a strength of a wireless communication signal as an input. The display device 100 may identify one connection mode by determining to which connection mode from among the plurality of connection modes the obtained target probability belongs.

In operation 430, the display device 100 may display a message informing about an automatic connection time corresponding to the identified connection mode.

According to an embodiment, the display device 100 may obtain the automatic connection time corresponding to the identified connection mode, based on the strength of the wireless communication signal of the electronic device 200, and display the message informing about the obtained automatic connection time. The message may include, for example, a cancellation item for cancelling a connection operation together with a guide indicating that an operation of wireless communication connection to the electronic device 200 will automatically start after the automatic connection time has elapsed.

In operation 440, the display device 100 may process whether to perform an operation of automatic connection to the electronic device 200 according to a user response corresponding to the displayed message.

According to an embodiment, when no user input is received in response to the displayed message, the display device 100 may start the operation of automatic connection to the electronic device 200 after the automatic connection time has elapsed.

According to an embodiment, when a user input of selecting the cancellation item is received from the user in response to the displayed message, the display device 100 may not perform the communication connection operation to the electronic device 200.

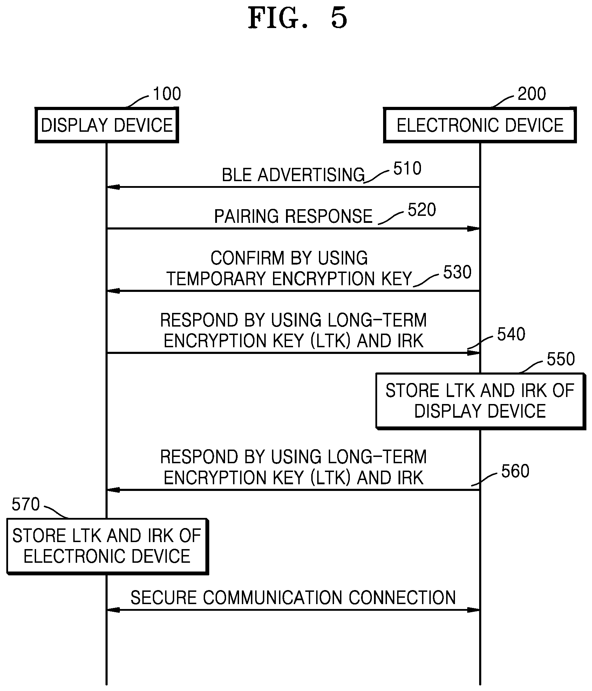

Hereinafter, operations according to various embodiments will be described in detail with reference to FIGS. 5 to 14.

Embodiments of the present disclosure are for providing a connection operation further adaptive to a use environment between a display device and an electronic device, which have already performed Bluetooth communication pairing, when a reconnection operation is performed conveniently based on previous pairing information, in a case where the electronic device is to connect to the display device again later.

FIG. 5 is a flowchart illustrating an example of pairing operation between a display device and an electronic device, according to an embodiment.

In operation 510, the electronic device 200 may broadcast a BLE advertising packet to transmit a pairing request.

In operation 520, the display device 100 may transmit a pairing response to the electronic device 200.

In operation 530, the electronic device 200 may transmit, to the display device 100, a temporary encryption key together with confirmation.

In operation 540, the display device 100 may transmit, to the electronic device 200, a response together with a long-term encryption key (LTK) and an identification (ID) resolving key (IRK) of the display device 100.

In operation 550, the electronic device 200 may store the LTK and IRK of the display device 100, which have been received from the display device 100.

In operation 560, the electronic device 200 may transmit, to the display device 100, a response together with LTK and IRK of the electronic device 200.

In operation 570, the display device 100 may store the LTK and IRK of the electronic device 200.

Such key exchange and storage between BLE devices are referred to as bonding, and through a bonding process, a secure BLE connection may be established and continuous encryption may be provided through LTK exchange. The BLE devices may exchange an IRK in addition to an LTK. The IRK may be used together with a random private address to authenticate a connection when a random address is periodically changed or when the BLE device returns to a range. This allows known devices to remain connected to each other by randomly changing addresses, and it is possible to prevent an untrusted device from tracking a device through a fixed address. Accordingly, exchanging and storing an IRK may be used to authenticate a device when establishing BLE privacy and resuming a BLE connection.

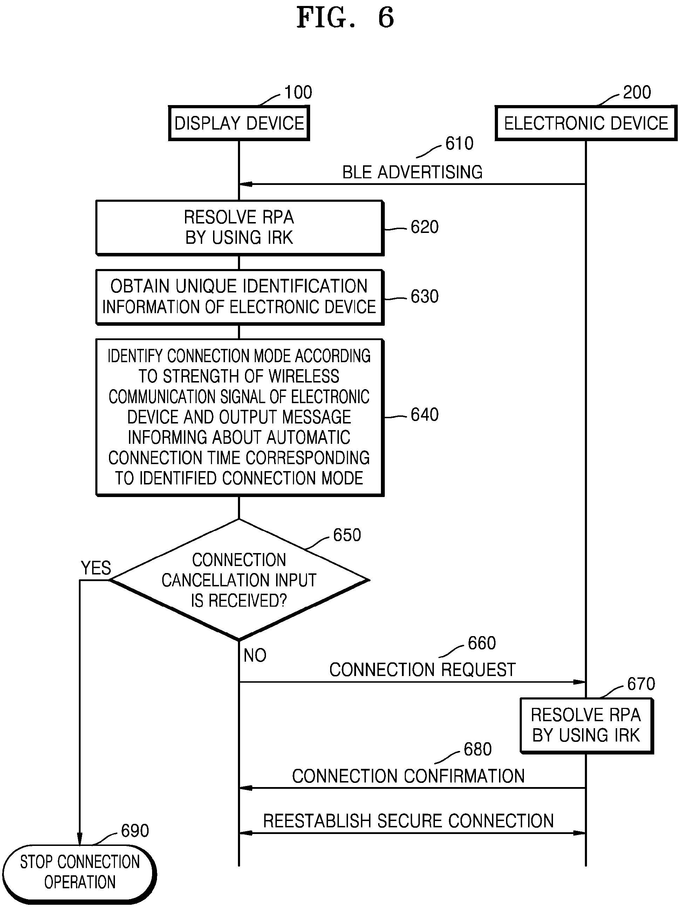

FIG. 6 illustrates an example of a flowchart of an operation of reconnecting to an electronic device that performed a bonding process, after a disconnection, according to an embodiment.

Referring to FIG. 6, in operation 610, the electronic device 200 may broadcast a BLE advertising packet to transmit a pairing request. The BLE advertising packet may include a random private address (RPA) of the electronic device 200.

In operation 620, the display device 100 may resolve the RPA by using an IRK of the electronic device 200, stored therein.

An advertiser address of the BLE advertising packet is a 6-byte (48-bit) field having a same length as a device MAC address. A device using an RPA instead of a static MAC address may transmit a 22-bit random number (PRAND) and 24-bit hash value together with 2 fixed bits. In order to identify an ID of a known device, a receiver of a BLE advertising packet using an RPA, i.e., the display device 100, may perform a known encryption function on a 128-bit IRK and a 24-bit PRAND (using 2 fixed bits) padded into the 128-bit IRK. When a result of the encryption function matches the 24-bit hash value extracted from an address field, an address is confirmed and the ID of the device may be confirmed. Then, the two devices may continuously communicate with each other in a secure private manner.

In operation 630, the display device 100 may obtain UID of the electronic device 200 through such an operation of resolving the RPA.

In operation 640, the display device 100 may identify a connection mode according to a strength of a wireless communication signal of the electronic device 200, according to embodiments of the present disclosure, and output a message informing about an automatic connection time corresponding to the identified connection mode. Detailed operations of operation 640 will be described in detail below.

In operation 650, the display device 100 may determine whether a user input of selecting connection cancellation is received. According to an embodiment, the display device 100 may determine whether the user input of selecting the connection cancellation is received before a lapse of the automatic connection time determined according to the connection mode identified according to the strength of the wireless communication signal of the electronic device 200.

When it is determined that the user input of selecting the connection cancellation is not received in operation 640, operation 660 may be performed.

In operation 660, the display device 100 may transmit a connection request to the electronic device 200. Here, the display device 100 may automatically transmit the connection request to the electronic device 200 after the automatic connection time determined according to the strength of the wireless communication signal of the electronic device 200 has elapsed.

In operation 670, the electronic device 200 may resolve an RPA of the display device 100 by using an IRK of the display device 100.

In operation 680, the electronic device 200 may transmit connection confirmation to the display device 100. According to such an operation, a secure connection between the display device 100 and the electronic device 200 may be reestablished.

When it is determined that the user input of selecting the connection cancellation is received in operation 640, operation 690 may be performed.

In operation 690, the display device 100 may stop a connection operation without further proceeding with the connection operation to the electronic device 200.

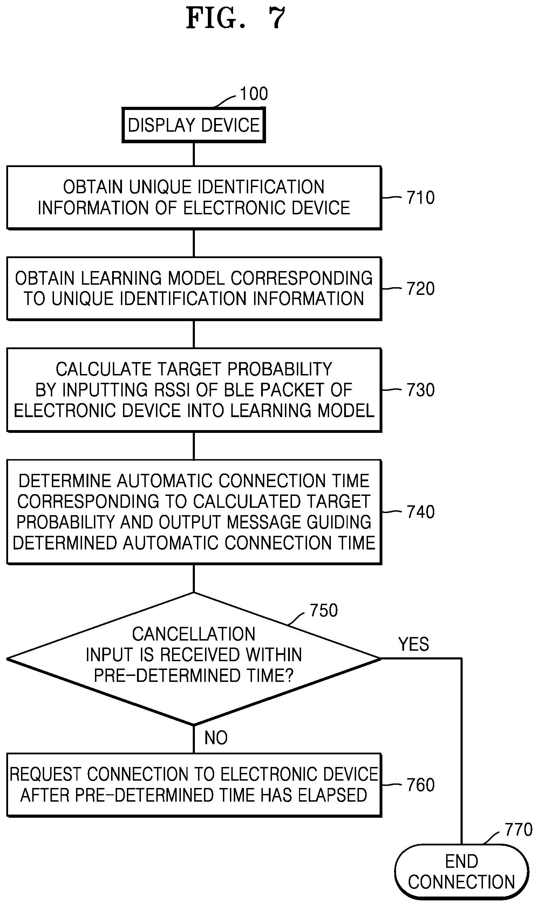

FIG. 7 illustrates an example of a flowchart of an operation method of a display device, according to an embodiment. Operations 750 to 770 of FIG. 7 may correspond to operations 650 to 690 of FIG. 6.

In operation 710, the display device 100 may obtain UID of the electronic device 200.

According to an embodiment, based on discovering a BLE advertising packet of the electronic device 200, the display device 100 may identify whether there are previous bonding and connection histories through a BLE MAC address of the electronic device 200 and then resolve a BT MAC address using the BLE MAC address. Then, the display device 100 may find the UID of the electronic device 200 through the BT MAC address.

In operation 720, the display device 100 may obtain a learning model corresponding to the UID of the electronic device 200.

According to an embodiment, the display device 100 may store a learning model mapped to one or more electronic devices that have pairing histories with the display device 100.

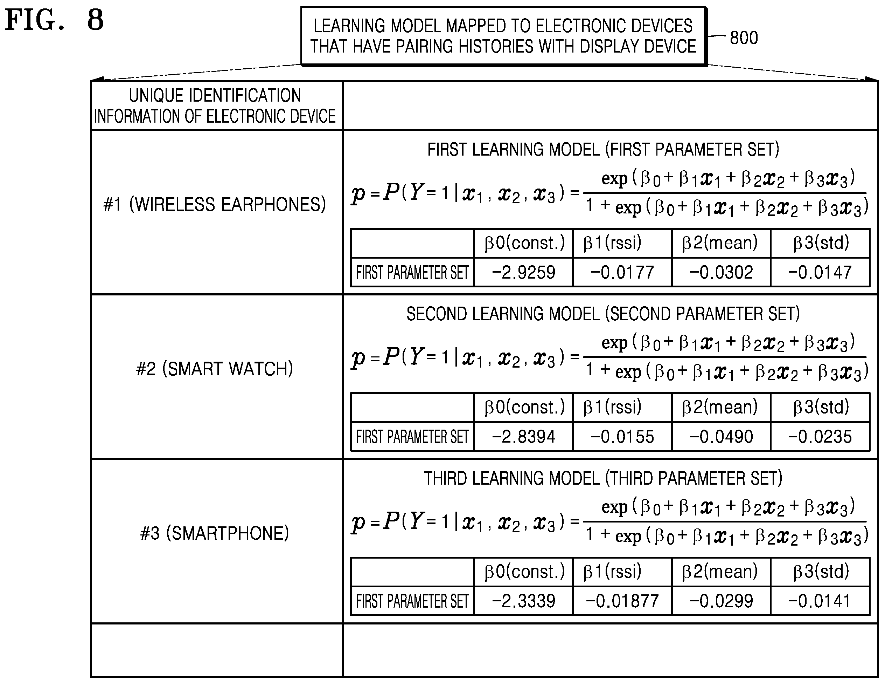

FIG. 8 illustrates an example of the learning model mapped to one or more electronic devices that have pairing histories with the display device 100, according to an embodiment.

Referring to FIG. 8, the display device 100 may include a learning model database 800 of learning models mapped to electronic devices that have pairing histories with the display device 100.

In the learning model database 800, a first learning model may be mapped to wireless earphones having UID #1, a second learning model may be mapped to a smart watch having UID #2, and a third learning model may be mapped to a smartphone having UID #3.

Commonly for all electronic devices, the learning model denotes a model pre-trained using a binominal logistic regression model, considering that a viewing distance from a display device is generally a pre-determined distance (e.g., 4 m).

In binomial logistic regression, a result of a dependent variable includes two categories, such as (success, failure), and in binomial logistic regression analysis, the two categories are represented as 0 and 1 and the sum of probabilities of being classified into each category is 1.

In the binomial logistic regression, a logistic function p may be defined as follows, which may indicate a probability that a dependent variable belongs to a category of 1 when a specific independent variable x is given.$p = P \left(Y=1\left|x1,x2,x3\right.\right) = \frac{exp \left(β0+β1x1+β2x2+β3x3\right)}{1 + exp \left(β0+β1x1+β2x2+β3x3\right)}$

In other words, the probability p defined by the above learning model may indicate a probability that P belongs to a category of 1 when x1, x2, and x3 are given. Here, β0 denotes a constant, β1 denotes a coefficient multiplied by x1 indicating an RSSI value, β2 denotes a coefficient multiplied by x2 indicating an average of a pre-determined number of RSSI values, and β3 denotes a coefficient of x3 indicating a standard deviation of a pre-determined number of RSSI values.

In other words, the display device 100 may calculate the target probability p by inputting, to the logistic function p, an RSSI value, an average of RSSI values, and a standard deviation of RSSI. The target probability p may be understood as a probability that a user has a connection intention because a connection request from an electronic device that has currently transmitted a Bluetooth communication signal is in a same space as a display device. Accordingly, when a target probability obtains as a result has a large value, an automatic connection time may be set as short as possible by interpreting that there is a high probability that the user has the connection intention, and when the target probability obtains as the result has a small value, the automatic connection time may be set as long as possible by interpreting that there is a low probability that the user has the connection intention.

Bluetooth communication performance may vary depending on product characteristics of each electronic device, i.e., whether the electronic device is wireless earphones or a smart watch, and even if the electronic device is a same product, Bluetooth communication performance may vary depending on models, i.e., various models and manufacturers of wireless earphones. Accordingly, the display device 100 may provide a learning model corresponding to each of one or more electronic devices that have pairing histories with the display device 100. Here, the learning models corresponding to electronic devices have different values of parameter sets {β0, β1, β2, β3} used for the logistic function p. For example, the first learning model using a first parameter set {β0, β1, β2, β3} = {-2.9259, -0.0177, -0.0302,-0.0147} may be obtained for the wireless earphones having the UID #1, the second learning model using a second parameter set {β0, β1, β2, β3}= {-2.8394, -0.0155, -0.0490, -0.0235} may be obtained for the smart watch having the UID #2, and the third learning model using a third parameter set {β0, β1, β2, β3} = {-2.8394, -0.0155, -0.0490, -0.0235} may be obtained for the smartphone having the UID #3.

Referring back to FIG. 7, in operation 730, the display device 100 may calculate a target probability by inputting, into the learning model, RSSI of the BLE advertising packet of the electronic device.

An advertising packet (beacon message) periodically transmitted by a BLE device in an advertise mode includes RSSI and the RSSI indicates a power measurement value present in a received wireless signal. The RSSI is mainly indicated in a negative dBm value, and a signal is strong when close to 0 dBm. Accordingly, a value of RSSI increases when a distance between a transmitter transmitting an advertising packet and a receiver receiving the advertising packet in BLE is decreased, and the value of RSSI decreases when the distance between the transmitter and the receiver is decreased. Based on such a characteristic, the RSSI may be used as an indicator representing the distance between the transmitter and the receiver.
$RSSI = 10 nlog 10 \left(d\right) + α ;$

Here, n denotes a path loss index and has a value of 2 to 4 depending on a surrounding environment (whether there is a wall or an obstacle). When there is no obstacle around, the path loss index is 2, and may be 3 or 4 depending on whether there is an obstacle and the number of obstacles. Also, d denotes a distance and α denotes a value of a base RSSI measured from the receiver at a specific distance by using TX power.

For example, the display device 100 may collect a pre-determined number (e.g., 40 or more) of RSSI values by measuring BLE advertising packets of the electronic device received for a pre-determined time (e.g., 4 seconds). An outlier may be removed from the collected RSSIs by using a quartile, and an average and a standard deviation may be calculated. (Tukey Fences Method) Q1-(1.5*IQR) may be defined as a lower bound and Q3+(1.5*IQR) may be defined as an upper bound, values that are less than the lower bound and exceed the upper bound may be determined as outliers, and an average and a standard deviation may be obtained from RSSI values from which the outliers are excluded. (Q1: Quartile 1, Q3: Quartile 3, IQR: Interquartile range)

The average, the standard deviation, and the RSSI values calculated as such are input to the learning model corresponding to UID of the electronic device to calculate the target probability. Here, the target probability may be understood as a probability that a user has a connection intention because a current connection request from an electronic device is in a same space as a display device.

In operation 740, the display device 100 may determine an automatic connection time corresponding to the calculated target probability and output a message guiding the determined automatic connection time.

According to an embodiment, the display device 100 may determine the automatic connection time according to the calculated target probability. For example, the display device 100 may determine the automatic connection time to be short when a value of the calculated target probability is high and the automatic connection time to be long when the value of the calculated target probability is low.

According to an embodiment, the display device 100 may store a connection mode table to determine the automatic connection time according to the calculated target probability.

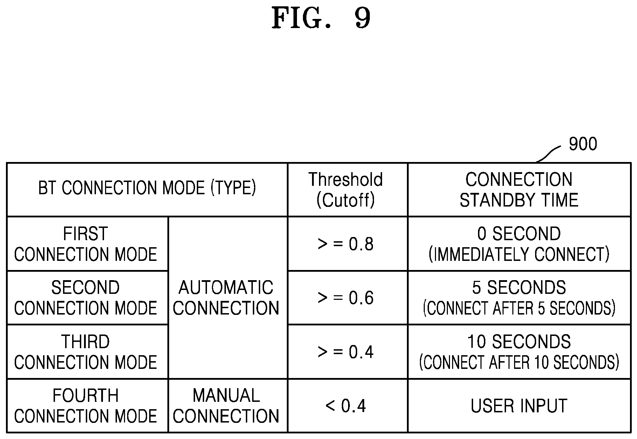

FIG. 9 illustrates an example of a connection mode table according to an embodiment.

Referring to FIG. 9, a connection mode table 900 may include a plurality of connection modes. For example, the connection mode table 900 includes 4 connection modes, wherein 3 connection modes indicate automatic connection modes and 1 connection mode indicates a manual connection mode. The automatic connection mode may indicate a mode in which a connection operation automatically starts after a certain time has elapsed. The manual connection mode may indicate a mode in which automatic connection is not provided and a connection operation starts only when a user input is received.

In a first connection mode, a calculated target probability is 0.8 or more and an automatic connection time, i.e., a connection standby time indicates an immediate connection. For example, when the target probability calculated by the display device 100 is 0.8 or more, the display device 100 may identify the first connection mode according to the target probability and start an operation of immediate connection according to the automatic connection time corresponding to the first connection mode.

In a second connection mode, a calculated target probability is 0.6 or more and a connection standby time indicates 5 seconds. For example, when the target probability calculated by the display device 100 is 0.6 or more (but obviously not more than 0.8), the display device 100 may identify the second connection mode according to the target probability and start an operation of immediate connection after 5 seconds according to the automatic connection time corresponding to the second connection mode.

In a third connection mode, a calculated target probability is 0.4 or more and a connection standby time indicates 10 seconds. For example, when the target probability calculated by the display device 100 is 0.4 or more (but obviously not more than 0.6), the display device 100 may identify the third connection mode according to the target probability and start an operation of connection after 10 seconds according to the automatic connection time corresponding to the third connection mode.

In a fourth connection mode, a calculated target probability is less than 0.4 and a connection standby time is not determined. For example, when the target probability calculated by the display device 100 is less than 0.4, the display device 100 may identify the fourth connection mode according to the target probability, may not proceed with an automatic connection according to the fourth connection mode, and may start a connection operation only when a user input is received.

Types of connection modes shown in FIG. 9 are only examples, and it would be well understood by one of ordinary skill in the art that the number of connection modes and an automatic connection time set in each connection mode may be variously determined.

The display device 100 that has determined the automatic connection time as such may output the message informing about the automatic connection time corresponding to the calculated target probability.

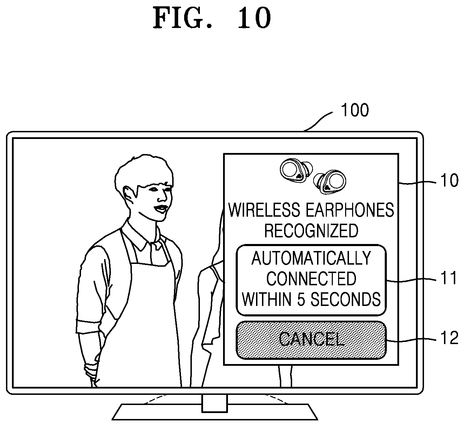

FIG. 10 illustrates an example of a message informing about an automatic connection time, according to an embodiment.

According to an embodiment, the display device 100 may output a message guiding that an electronic device connection operation will automatically start after a determined automatic connection time elapses. For example, when the automatic connection time is determined to be 5 seconds, the display device 100 may output a message informing about that an automatic connection will be performed after 5 seconds, and when the automatic connection time is determined to be 10 seconds, the display device 100 may output a message informing about that an automatic connection will be performed after 10 seconds. For example, when the automatic connection time is determined to be 0 as in the first connection mode, the display device 100 may immediately perform an automatic connection to an electronic device without outputting a message. For example, when a manual connection mode is determined as in the fourth connection mode, the display device 100 may output a popup window including a button for receiving a user input indicating a connection operation.

Referring to FIG. 10, the display device 100 may output the popup window 10 informing about the automatic connection time. The popup window 10 may include, for example, the item 11 of <Automatically connected within 5 seconds> and the item 12 of <Cancel> together with a message indicating that wireless earphones have been recognized as an electronic device. Based on receiving a user input of selecting the item 12 of <Cancel>, the display device 100 may stop the connection operation to the electronic device without having to wait for the automatic connection time to elapse. When a user input is not received, the display device 100 may wait for the automatic connection time to elapse and immediately perform the operation of automatic connection after the automatic connection time has elapsed.

According to an embodiment, when a user input of selecting the item 11 of <Automatically connected within 5 seconds> is received, the display device 100 may immediately perform the operation of automatic connection without having to wait for the automatic connection time, i.e., 5 seconds, to elapse.

According to an embodiment, the display device 100 may output a popup window while the item 12 of <Cancel> is selected such that, when a user desires automatic connection cancellation, the user may immediately press a check button by using a remote controller to execute the item 12 of <Cancel>, without having to separately move between items by using the remote controller.

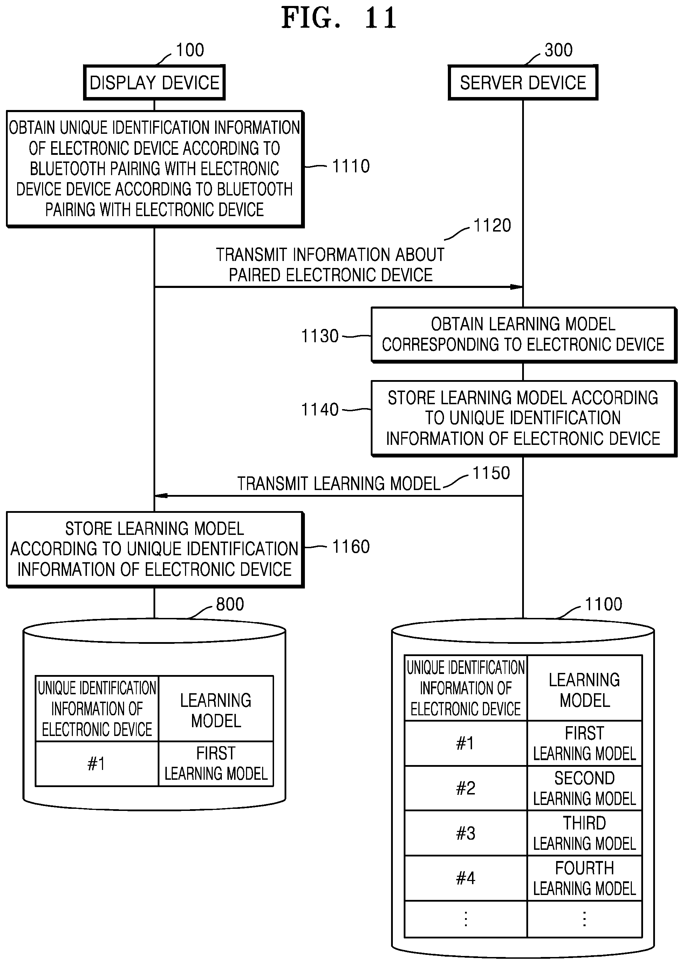

FIG. 11 is a flowchart of an operation of storing a learning model for an electronic device paired with a display device, according to an embodiment.

Referring to FIG. 11, in operation 1110, the display device 100 may obtain UID of an electronic device according to Bluetooth pairing with the electronic device.

In operation 1120, the display device 100 may transmit, to the server device 300, information about the electronic device that has a pairing history, i.e., information about the electronic device including the UID of the electronic device, to request learning model generation.

In operation 1130, the server device 300 may obtain a learning model suitable for the electronic device, based on the information about the electronic device received from the display device 100. The learning model may vary depending on a product characteristic or a model type of the electronic device, and the server device 300 may obtain the suitable learning model based on the information about the electronic device.

In operation 1140, the server device 300 may store, in the learning model database 1100, the learning model according to the UID of the electronic device.

In operation 1150, the server device 300 may transmit, to the display device 100, the learning model corresponding to the UID of the electronic device.

In operation 1160, the display device 100 may store the learning model corresponding to the UID of the electronic device in the database 800.

In FIG. 11, it is illustrated that the server device 300 generates a learning model for an electronic device that is first paired. However, the present disclosure is not limited thereto.

According to an embodiment, the display device 100 may store information about one or more learning models when the display device 100 is released, and the display device 100 may select a suitable learning model from among the learning models stored in the display device 100 for an electronic device that has a pairing history. Also, the display device 100 may register, in the server device 300, the learning model corresponding to a UID of the electronic device for future update.

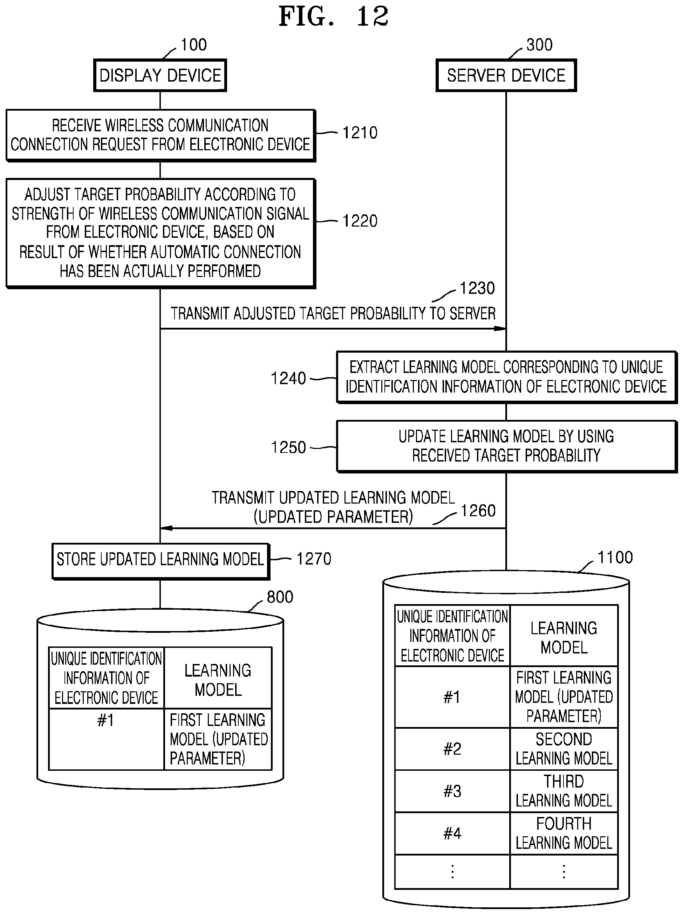

FIG. 12 is a flowchart of an example of an operation of updating a learning model, according to an embodiment.

Referring to FIG. 12, in operation 1210, the display device 100 may receive a wireless communication connection request from an electronic device.

In operation 1220, the display device 100 may adjust a target probability determined according to a strength of a wireless communication signal from the electronic device as described above with reference to FIGS. 4 to 10, based on a result of whether an automatic connection has been actually performed. In other words, the display device 100 may reflect, in an update on a parameter of a learning model, the result of the automatic connection, such as whether the automatic connection has been performed after a lapse of a determined automatic connection time with actual approval from a user for the automatic connection time after the display device 100 outputs a popup window according to the determined automatic connection time (may be interpreted as matching an intention of the user) or whether the automatic connection is not performed and a connection has been canceled (may be interpreted as not matching the intention of the user).

For example, the user may cancel the connection by selecting a cancellation item when a request is not based on the intention of the user, according to the popup window informing about the automatic connection time determined by the display device 100. In this case, it may be determined that the automatic connection time determined by the display device 100 is not based on the intention of the user, and thus, the display device 100 may adjust the target probability to 0.

For example, when the automatic connection is actually performed after the lapse of the determined automatic connection time according to the popup window informing about the automatic connection time determined by the display device 100, it may be determined that the automatic connection time determined by the display device 100 is based on the intention of the user, and thus, the display device 100 may adjust the target probability to 1.

In operation 1230, the display device 100 may transmit the adjusted target probability to the server device 300. The display device 100 may transmit, to the server device 300, the target probability (1 when connected and 0 when canceled) adjusted according to the automatic connection, an RSSI measurement value and a statistics value that are calculated to determine the automatic connection time, and a UID of the electronic device, for model retraining.

In operation 1240, the server device 300 may extract a learning model corresponding to the UID of the electronic device.

In operation 1250, the server device 300 may update the learning model by using the adjusted target probability received from the display device 100. The learning model may be updated by adjusting parameters included in the learning model.

In operation 1260, the server device 300 may transmit, to the display device 100, the updated learning model, i.e., the updated parameters.

In operation 1270, the display device 100 may store the updated learning model in the database 800.

In the embodiments described above, it has been described that an automatic connection time is determined based on wireless signal strength information of a BLE signal transmitted by a BLE transmitter. There is an aspect of using a wireless signal strength capable of being measured in the real world because it is difficult to accurately measure a distance between the BLE transmitter and a BLE receiver in the real world and it is also difficult to accurately predict an intention of an automatic connection between the BLE transmitter and the BLE receiver, only based on distance information due to the presence of various obstacles.

On the other hand, in a virtual world such as virtual reality or a digital twin, it is possible to recognize the distance between the BLE transmitter and BLE receiver or various conditions in an environment where the BLE transmitter and BLE receiver exist, such as information about the presence of obstacles or walls. The digital twin is a technology that creates a twin of a real-world object on a computer and predicts results in advance by simulating situations that may occur in the real world on the computer. The digital twin is attracting attention as a technology that may solve various industrial and social issues in addition to manufacturing issues. Fundamentally, the digital twin may be a combination of data and information, which represent structures, context, and operations of various physical systems, and may be an interface for understanding past and present operating conditions and predicting the future.

Accordingly, an automatic connection time may be determined in consideration of influence factors such as a distance, an obstacle, and a wall between the BLE transmitter and BLE receiver in a virtual world such as metaverse virtual reality or a digital twin. For example, the automatic connection time may be determined in consideration of influence factors such as a distance, an obstacle, and a wall between a Bluetooth headset and a television (TV), when an avatar wearing the Bluetooth headset is near the TV.

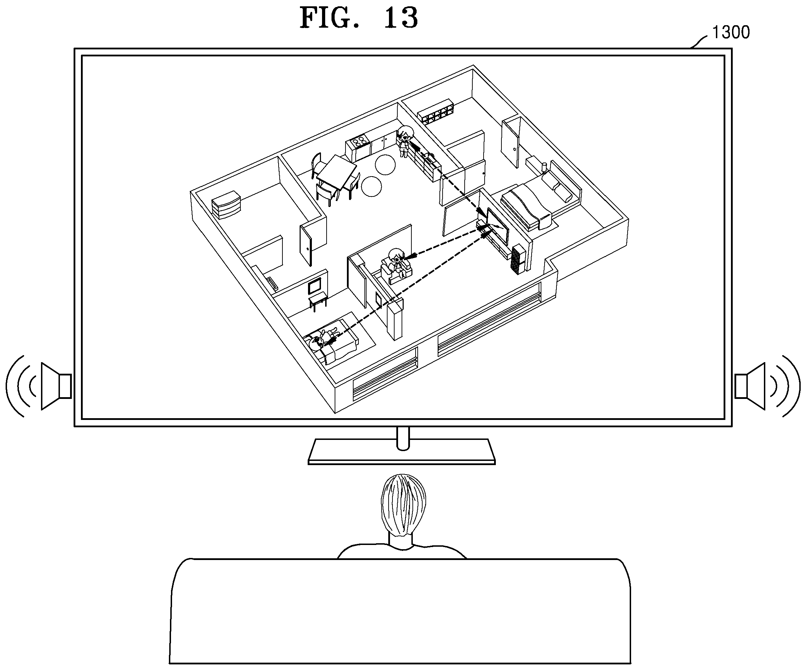

FIG. 13 illustrates an example in which a home environment is constructed in a virtual reality world, according to an embodiment.

Referring to FIG. 13, a home environment 1300 constructed in a virtual reality world may include a plurality of bedrooms, a living room, a kitchen, and a bathroom, and an automatic connection time may vary depending on where an avatar is located based on where a TV is located. Also, the automatic connection time may vary depending on not only a distance but also any wall or any obstacle between the TV and the avatar.

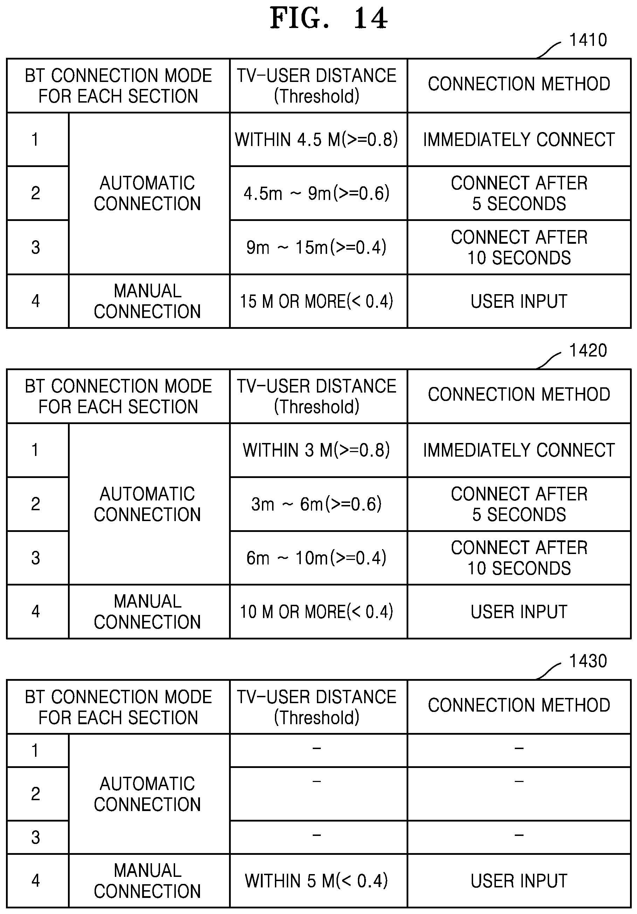

FIG. 14 illustrates examples of tables for determining an automatic connection time in consideration of influence factors including an environment and a distance between BLE devices, according to an embodiment.

Referring to FIG. 14, a table 1410 for determining an automatic connection time for a straight distance without an obstacle/wall includes four connection modes, wherein three connection modes indicate automatic connection modes and one connection mode indicates a manual connection mode. The automatic connection mode may indicate a mode in which a connection operation automatically starts after a certain time has elapsed. The manual connection mode may indicate a mode in which automatic connection is not provided and a connection operation starts only when a user input is received.

In a first connection mode, a distance between a BLE transmitter and a BLE receiver is within 4.5 m and a connection standby time indicates an immediate connection. For example, when the distance calculated by the display device 100 is within 4.5 m, the display device 100 may identify the first connection mode and start an operation of immediate connection according to an automatic connection time corresponding to the first connection mode.

In a second connection mode, a distance between a BLE transmitter and a BLE receiver is 4.5 m to 9 m and a connection standby time indicates 5 seconds. For example, when the distance calculated by the display device 100 is 4.5 m to 9 m, the display device 100 may identify the second connection mode and start an operation of immediate connection after 5 seconds, according to an automatic connection time corresponding to the second connection mode.

In a third connection mode, a distance between a BLE transmitter and a BLE receiver is 9 m to 15 m and a connection standby time indicates 10 seconds. For example, when the distance calculated by the display device 100 is 9 m to 15 m, the display device 100 may identify the third connection mode and start an operation of connection after 10 seconds, according to an automatic connection time corresponding to the third connection mode.

In a fourth connection mode, a distance between a BLE transmitter and a BLE receiver is 15 m or more and a connection standby time is not determined. For example, when the distance calculated by the display device 100 is 15 m or more, the display device 100 may identify the fourth connection mode, may not proceed with an automatic connection according to the fourth connection mode, and may start a connection operation only when a user input is received.

A table 1420 for determining an automatic connection time for a case where there is a large obstacle or a corner includes four connection modes, wherein three connection modes indicate automatic connection modes and one connection mode indicates a manual connection mode. In this case, an automatic connection time may be determined by reflecting a distance weight of 1.5.

A table 1430 for determining an automatic connection time for a case of beyond a door/wall without an open space includes four connection modes, wherein three connection modes indicate automatic connection modes and one connection mode indicates a manual connection mode. In this case, an automatic connection time may be determined by reflecting a distance weight of 3.

Some embodiments may also be realized in the form of a recording medium including instructions executable by a computer, such as a program module executed by a computer. A computer-readable medium may be an arbitrary available medium accessible by a computer, and includes all volatile and non-volatile media and separable and non-separable media. Further, the computer-readable recording medium may include a computer storage medium. Examples of the computer storage medium include all volatile and non-volatile media and separable and non-separable media, which have been implemented by an arbitrary method or technology, for storing information such as computer-readable instructions, data structures, program modules, and other data.

The embodiments of the disclosure may be implemented as a software program that includes instructions stored on computer-readable storage media.

A computer is an apparatus capable of calling a stored instruction from a storage medium and operating according to an embodiment of the disclosure according to the called instruction, and may include an electronic device according to embodiments of the disclosure.

The computer-readable storage medium may be provided in the form of a non-transitory storage medium. The term "non-transitory" only means that a storage medium does not include a signal and is tangible, and does not distinguish whether data is stored in the storage medium semi-permanently or temporarily.

Furthermore, a control method according to embodiments of the disclosure may be provided by being included in a computer program product. The computer program products are products that can be traded between sellers and buyers.

The computer program product may include a software program or a computer-readable storage medium storing a software program. For example, the computer program product may include a product (for example, a downloadable application) in a form of a software program that is electronically distributable through a manufacturer of a device or an electronic market (for example, Google PlayStore^{TM} or AppStore^{TM}). For electronic distribution, at least a part of the software program may be stored in the storage medium or temporarily generated. In this case, the storage medium may be a storage medium of a server of a manufacturer, a server of an electronic market, or a relay server that temporarily stores the software program.

The computer program product may include a storage medium of a server or a storage medium of a device, in a system including the server and the device. Alternatively, when there is a third device (e.g., a smartphone) that communicates with a server or a device, the computer program product may include a storage medium of the third device. Alternatively, the computer program product may include the software program transmitted from the server to the device or the third device, or transmitted from the third device to the device.

In this case, one of the server, the device, and the third device may perform a method according to embodiments of the disclosure by executing the computer program product. Alternatively, two or more of the server, the device, and the third device may perform the method according to embodiments of the disclosure in a distributed fashion by executing the computer program product.

For example, a server, for example, a cloud server or an artificial intelligence server, may execute the computer program product stored in the server to control the device communicatively connected to the server to perform the method according to embodiments of the disclosure.

In another example, the third device may execute the computer program product to control the device communicatively connected to the third device to perform the method according to an embodiment of the disclosure. When the third device executes the computer program product, the third device may download the computer program product from the server and execute the downloaded computer program product. Alternatively, the third device may execute a computer program product provided in a preloaded state to perform the method according to embodiments of the disclosure.

Furthermore, in the specification, the term "unit" may be a hardware component such as a processor or circuit and/or a software component that is executed by a hardware component such as a processor.

The above description of the present disclosure is provided for illustration, and it will be understood by one of ordinary skill in the art that various changes in form and details may be readily made therein without departing from essential features and the scope of the present disclosure as defined by the following claims. Accordingly, embodiments described above are examples in all aspects and are not limited. For example, each element described as a single type may be implemented in a distributed manner, and similarly, elements described as distributed may be implemented in a combined form.

The scope of the present disclosure is defined by the appended claims rather than the detailed description, and all changes or modifications within the scope of the appended claims and their equivalents will be construed as being included in the scope of the present disclosure.
The invention might include, relate to, and/or be defined by, the following aspects:
[Aspect 1] A display device 100 comprising:
   a display;
   a communication interface 110;
   memory 130 storing one or more instructions; and
   at least one processor 140 configured to execute the one or more instructions stored in the memory,
   wherein the at least one processor 140 is configured to execute the one or more instructions to:
      based on receiving a wireless communication connection request from an electronic device 200, detect a strength of a wireless communication signal received from the electronic device;
      identify, from among a plurality of connection modes, a connection mode corresponding to the strength of the wireless communication signal received from the electronic device, wherein, in the plurality of connection modes, automatic connection time representing a predetermined amount of time that elapses to automatically connect to the electronic device, varies depending on the strength of the wireless communication signal;
      control the display to display a message informing about an automatic connection time corresponding to the identified connection mode; and
      determine whether to perform an operation of automatic connection to the electronic device according to a user response corresponding to the displayed message and perform the operation of automatic connection according to the determination.
[Aspect 2] The display device of aspect 1, wherein the at least one processor 140 is further configured to detect the strength of the wireless communication signal, based on a received signal strength indicator (RSSI) of the wireless communication signal.
[Aspect 3] The display device of aspects 1 or 2, wherein each connection mode of the plurality of connection modes is set such that the automatic connection time is decreased as the strength of the wireless communication signal increases and the automatic connection time is increased as the strength of the wireless communication signal decreases.
[Aspect 4] The display device of any one of aspects 1 to 3, wherein the at least one processor 140 is further configured to perform the operation of automatic connection to the electronic device, based on a lapse of the automatic connection time when the user response is not received in response to the displayed message.
[Aspect 5] The display device of any one of aspects 1 to 3, wherein the at least one processor 140 is further configured to not perform the operation of automatic connection to the electronic device when the user response of selecting cancellation is received in response to the displayed message.
[Aspect 6] The display device of any one of aspects 1 to 5, wherein the at least one processor is further configured to identify the connection mode corresponding to the detected strength of the wireless communication signal from among the plurality of connection modes, by using a pre-trained model.
[Aspect 7] The display device of any one of aspects 1 to 6, wherein the at least one processor is further configured to calculate a target probability corresponding to the detected strength of the wireless communication signal by using the pre-trained model and identify, as the connection mode, a connection mode corresponding to the calculated target probability from among the plurality of connection modes.
[Aspect 8] The display device of any one of aspects 1 to 7, wherein the at least one processor is further configured to update the pre-trained model by using a result of whether the operation of automatic connection to the electronic device has been performed.
[Aspect 9] The display device of any one of aspects 1 to 8, wherein the at least one processor is further configured to:
   adjust the target probability according to the result of whether the operation of automatic connection has been performed and transmit the adjusted target probability to a server; and
   update the pre-trained model by receiving, from the server, the pre-trained model retrained based on the adjusted target probability.
[Aspect 10] An operation method of a display device 100, the operation method comprising:
   based on receiving a wireless communication connection request from an electronic device, detecting a strength of a wireless communication signal received from the electronic device;
   identifying, from among a plurality of connection modes, a connection mode corresponding to the strength of the wireless communication signal received from the electronic device, wherein, in the plurality of connection modes, automatic connection time representing a predetermined amount of time that elapses to automatically connect to the electronic device, varies depending on the strength of the wireless communication signal;
   displaying a message informing about an automatic connection time corresponding to the identified connection mode; and
   determining whether to perform an operation of automatic connection to the electronic device according to a user response corresponding to the displayed message and performing the operation of automatic connection according to the determination.
[Aspect 11] The method of aspect 10, wherein the strength of the wireless communication signal is detected based on a received signal strength indicator (RSSI) of the wireless communication signal.
[Aspect 12] The method of aspect 10 or 11, wherein each connection mode of the plurality of connection modes is set such that the automatic connection time is decreased as the strength of the wireless communication signal increases and the automatic connection time is increased as the strength of the wireless communication signal decreases.
[Aspect 13] The method of any one of aspects 10 to 12, further comprising performing the operation of automatic connection to the electronic device, based on a lapse of the automatic connection time when the user response is not received in response to the displayed message.
[Aspect 14] The method of any one of aspects 10 to 12, further comprising stopping the operation of automatic connection to the electronic device when the user response of selecting cancellation is received in response to the displayed message.
[Aspect 15] A non-transitory computer-readable recording medium having recorded thereon one or more programs executed by a processor of a display device to implement an operation method of the display device, wherein the operation method of the display device comprises:
   based on receiving a wireless communication connection request from an electronic device, detecting a strength of a wireless communication signal received from the electronic device;
   identifying, from among a plurality of connection modes, a connection mode corresponding to the strength of the wireless communication signal received from the electronic device, wherein, in the plurality of connection modes, automatic connection time representing a predetermined amount of time that elapses to automatically connect to the electronic device, varies depending on the strength of the wireless communication signal;
   displaying a message informing about an automatic connection time corresponding to the identified connection mode; and
   determining whether to perform an operation of automatic connection to the electronic device according to a user response corresponding to the displayed message and performing the operation of automatic connection according to the determination.

## Claims

1. A display device (100) comprising:
a display;
a communication interface (110);
memory (130) storing one or more instructions; and
at least one processor (140) configured to execute the one or more instructions stored in the memory, wherein the at least one processor (140) is configured to execute the one or more instructions to:
detect a strength of a wireless communication signal received from an electronic device (200);
determine an automatic connection time that varies depending on the strength of the wireless communication signal; and
perform an operation of automatic connection to the electronic device based on the automatic connection time.

2. The display device of claim 1, wherein the at least one processor (140) is further configured to detect the strength of the wireless communication signal based on receiving a wireless communication connection request from the electronic device.

3. The display device of claim 1 or 2, wherein the at least one processor (140) is further configured to control the display to display a message about the automatic connection time, determine whether to perform the operation of automatic connection to the electronic device according to a user response corresponding to the displayed message, and perform the operation of automatic connection according to the determination.

4. The display device of claim 3, wherein the at least one processor (140) is further configured to perform the operation of automatic connection to the electronic device, based on a lapse of the automatic connection time when the user response is not received in response to the displayed message.

5. The display device of claim 3, wherein the at least one processor (140) is further configured to not perform the operation of automatic connection to the electronic device when the user response of selecting cancellation is received in response to the displayed message.

6. The display device of any one of claims 1 to 5, wherein the at least one processor (140) is further configured to identify, from among a plurality of connection modes, a connection mode corresponding to the strength of the wireless communication signal, wherein the automatic connection time represents a predetermined amount of time that elapses to automatically connect to the electronic device, varies among the plurality of connection modes depending on the strength of the wireless communication signal, and corresponds to the identified connection mode.

7. The display device of claim 6, wherein each connection mode of the plurality of connection modes is set such that the automatic connection time is decreased as the strength of the wireless communication signal increases and the automatic connection time is increased as the strength of the wireless communication signal decreases.

8. The display device of claim 6 or 7, wherein the at least one processor (140) is further configured to identify the connection mode corresponding to the detected strength of the wireless communication signal from among the plurality of connection modes, by using a pre-trained model.

9. The display device of claim 8, wherein the at least one processor (140) is further configured to calculate a target probability corresponding to the detected strength of the wireless communication signal by using the pre-trained model and identify, as the connection mode, a connection mode corresponding to the calculated target probability from among the plurality of connection modes.

10. The display device of claim 9, wherein the at least one processor (140) is further configured to update the pre-trained model by using a result of whether the operation of automatic connection to the electronic device has been performed.

11. The display device of claim 10, wherein the at least one processor (140) is further configured to: adjust the target probability according to the result of whether the operation of automatic connection has been performed and transmit the adjusted target probability to a server; and update the pre-trained model by receiving, from the server, the pre-trained model retrained based on the adjusted target probability.

12. The display device of claim 8, wherein the at least one processor (140) is further configured to: obtain a unique identifier, UID, of the electronic device; and obtain, as the pre-trained model, a learning model mapped to the UID of the electronic device from among a plurality of learning models respectively mapped to one or more electronic devices having pairing histories with the display device, wherein the plurality of learning models have parameter sets different from each other.

13. The display device of claim 6, wherein the plurality of connection modes comprise a plurality of automatic connection modes in each of which the operation of automatic connection starts after the automatic connection time has elapsed, and a manual connection mode in which the operation of automatic connection is not performed and a connection operation to the electronic device starts only when a user input is received.

14. An operation method of a display device (100), the operation method comprising:
detecting a strength of a wireless communication signal received from an electronic device (200);
determining an automatic connection time that varies depending on the strength of the wireless communication signal; and
performing an operation of automatic connection to the electronic device based on the automatic connection time.

15. A non-transitory computer-readable recording medium having recorded thereon one or more programs executed by a processor of a display device to implement an operation method of the display device, wherein the operation method of the display device comprises:
detecting a strength of a wireless communication signal received from an electronic device (200);
determining an automatic connection time that varies depending on the strength of the wireless communication signal; and
performing an operation of automatic connection to the electronic device based on the automatic connection time.
